# FASCICULE DE BREVET EUROPEEN

(11) **EP 3 513 516 B1**
(45) Date de publication et mention de la délivrance du brevet: **01.09.2021**
(21) Numéro de dépôt: 17777940.2
(22) Date de dépôt: 14.09.2017
(51) Int. Cl.: H04J 14/02

(54) **PROCÉDÉ ET DISPOSITIF DE CONTRÔLE DE CHARGE D'UNE LIGNE DE TRANSMISSION OPTIQUE À MULTIPLEXAGE EN LONGUEURS D'ONDE**
VERFAHREN UND VORRICHTUNG ZUR STEUERUNG DER BELASTUNG EINER OPTISCHEN ÜBERTRAGUNGSLEITUNG MIT WELLENLÄNGENMULTIPLEXING
METHOD AND DEVICE FOR CONTROLLING THE LOAD OF AN OPTICAL TRANSMISSION LINE WITH WAVELENGTH-DIVISION MULTIPLEXING

(30) Priorité: 16.09.2016 FR 1658675
(43) Date de publication de la demande: 24.07.2019
(73) Titulaire: ORANGE, 92130 Issy-les-Moulineaux (FR)
(72) Inventeur: PINCEMIN, Erwan, 92326 Châtillon Cedex (FR); LOUSSOUARN, Yann, 92326 Châtillon Cedex (FR)
(86) Numéro de dépôt international: PCT/FR2017/052460
(87) Numéro de publication internationale: WO 2018/051028

(56) Documents cités:
- EP-A2- 2 784 961
- WO-A1-2013/170909
- US-B2- 8 971 705

## Description

La présente invention concerne le domaine de la transmission de signaux optiques multiplexés en longueurs d'onde (« WDM » pour « Wavelength Division Multip lexed » en anglais), et plus particulièrement la gestion de la charge optique des lignes optiques transportant de tels signaux.

Les systèmes de transmission WDM sont habituellement dimensionnés pour transporter un certain nombre de longueurs d'onde dans la bande d'amplification des amplificateurs optiques (e.g. de type EDFA) placés le long de ce système, soit typiquement entre 80 et 100 canaux WDM selon une grille fixe d'allocation de longueurs d'onde, ou bien un mélange de canaux standards mono-longueurs d'onde et de « super-canaux » (ou « super-channels ») composés de plusieurs longueurs d'onde et formant un seul et même canal optique sur une grille flexible d'allocation de longueurs d'onde.

Cependant, au début de la vie d'un système de transmission WDM (i.e. lors de son déploiement initial), ce système est la plupart du temps en « sous-charge », l'opérateur n'ayant pas besoin d'utiliser la totalité des longueurs d'onde dans un premier temps. Cette sous-charge du système peut avoir des répercussions néfastes sur le fonctionnement des amplificateurs optiques, en provoquant notamment des problèmes de platitude de gain, une élévation du facteur de bruit, ou bien encore une puissance par canal non-optimisée à la sortie de l'amplificateur.

A titre d'exemple, un système WDM peut ne transporter que 40 longueurs d'onde à 10 Gbps dans un premier temps alors qu'il a été dimensionné pour transporter 80 canaux WDM. Dans ce cas de figure, les 40 canaux WDM à 10 Gbps utilisés ont une puissance nominale 3 dB plus élevée que celle prévue par l'ingénierie lors du déploiement du système. Des problèmes peuvent alors survenir lorsqu'on insère par la suite des canaux WDM supplémentaires à 100 Gbps. Les effets non-linéaires induits par la transmission dans la fibre optique explosent alors et les nouveaux canaux à 100 Gbps, en particulier lorsqu'ils utilisent une modulation DP-QPSK cohérente, sont très affectés par les effets non-linéaires de type modulation de phase croisée en provenance des canaux à 10 Gbps en modulation NRZ-OOK. Ceci diminue significativement la portée des canaux WDM à 100 Gbps, et donc oblige à régénérer ces canaux plus souvent, ce qui est particulièrement coûteux à ces vitesses de transmission.

La demande de brevet WO 2006/031340 décrit une architecture de charge spectrale des systèmes de transmission WDM, utilisant un dispositif de charge optique placé en entrée de ligne optique injectant des signaux optiques à des longueurs d'onde non-utilisées pour transporter des informations, afin notamment de maintenir les amplificateurs de la ligne optique à un certain niveau de saturation.

Cependant, dans ce document, le dispositif de charge optique est implémenté sous la forme soit d'une combinaison d'une multitude de lasers à longueur d'onde fixe, soit d'une source de bruit associée à un filtre d'entrelacement optique, présentant ainsi une structure figée, devant être spécifiquement conçue pour être adaptée aux émetteurs optiques utilisés pour la ligne considéré. Ainsi, un nombre de lasers de charge égal au nombre de lasers sources d'information doit être provisionné dans le premier cas alors que, dans le second cas, le filtre d'entrelacement optique doit être spécifiquement choisi en fonction du nombre de lasers sources d'information.

Non seulement un tel système est lourd à mettre en place, ne peut pas être industrialisé à grande échelle et n'est pas adapté à la diversité des émetteurs optique de type WDM déployés, mais il n'est pas capable non plus de s'adapter de manière flexible à des modifications dynamiques au niveau des émetteurs optiques composant un émetteur de type WDM, notamment un changement du nombre de ces émetteurs, un changement du type de modulation employé par l'un de ces émetteurs ou un changement de l'espacement spectral entre les longueurs d'onde émises par deux émetteurs voisins spectralement. Dans un tel cas de changement, il faut alors une intervention manuelle pour remplacer, retirer ou rajouter des lasers de charge, ou remplacer le filtre d'entrelacement optique, ce qui s'avère également coûteux. Une telle intervention manuelle nécessite une interruption du système WDM portant le trafic pendant la modification ou la mise à jour du système de charge optique.

La demande de brevet EP 2 784 961, pour sa part, décrit un système d'insertion de lumière de bourrage (« dummy light ») dans lequel des longueurs d'onde de bourrage ou des sous-bandes optiques de bourrage sont utilisées dans une sous-bande optique donnée, en fonction de l'état de cette sous-bande, déterminé à partir d'un rapport signal sur bruit moyen pour cette sous-bande, lui-même déterminé à partir de mesure de rapport signal sur bruit sur des longueurs d'onde utiles émises par une station opposée, située à l'autre extrémité de la ligne optique.

La présente invention a pour objet de remédier à de tels inconvénients, en proposant un dispositif et un procédé de charge d'une ligne optique d'un système WDM, permettant de faire fonctionner cette ligne optique à pleine charge en permanence, qui puisse s'adapter à différentes configurations d'émetteurs optique tout en offrant une flexibilité d'utilisation dans le temps d'un système de transmission WDM, une fois celui-ci déployé.

Plus particulièrement, la présente invention concerne un dispositif de contrôle de charge d'une ligne de transmission optique dont l'entrée est couplée à un dispositif d'émission apte à moduler avec des données et multiplexer une pluralité de longueurs d'onde, dites utiles, en un signal optique utile à transmettre sur la ligne de transmission optique, le dispositif de contrôle de charge comprenant des moyens de génération d'un signal optique de bourrage, composé d'au moins une longueur d'onde de bourrage non-modulée par des données, à injecter dans la ligne de transmission optique. Dans ce dispositif de contrôle de charge, les moyens de génération sont configurés pour générer au moins un signal optique source composé au moins d'une pluralité de longueurs d'onde correspondant à la pluralité de longueurs d'onde du signal optique utile et pour sélectionner ladite au moins une longueur d'onde du signal optique de bourrage parmi les longueurs d'onde du au moins un signal optique source. De plus, ce dispositif de contrôle de charge comprend un module de contrôle configuré pour contrôler la sélection, par les moyens de génération, de la au moins une longueur d'onde du signal optique de bourrage en fonction d'une première information indicative du non-allumage d'au moins une longueur d'onde parmi la pluralité de longueurs d'onde du signal optique utile.

Un tel dispositif de contrôle de charge peut non seulement s'adapter à tout type de système de transmission WDM présentant une configuration particulière dans le plan spectral lors de son déploiement initial, mais également s'adapter simplement, de manière flexible et sans avoir à recourir nécessairement à une intervention manuelle, au changement pouvant affecter cette configuration en cours de vie du système.

Selon un mode de réalisation particulier, les moyens de génération comprennent au moins un module de génération d'un signal optique source contrôlé par le module de contrôle et un module de sélection en longueurs d'onde, configuré pour recevoir le signal optique source et pour sélectionner, sur commande du module de contrôle, la au moins une longueur d'onde de bourrage du signal optique de bourrage parmi les longueurs d'onde du au moins un signal optique source. Une telle implémentation offre une flexibilité accrue en permettant de contrôler, de manière séparée, d'une part la génération proprement dite du signal optique de bourrage et des longueurs d'onde qui le compose, et d'autre part la sélection des longueurs de bourrage à utiliser pour charger le système WDM.

De manière avantageuse, le module de sélection est configuré en outre pour ajuster le niveau de puissance de ladite au moins une longueur d'onde du signal optique de bourrage sélectionnée en fonction d'une information relative au niveau de puissance d'émission des longueurs d'onde utiles, ce qui permet de régler la puissance des composantes du signal de bourrage en fonction de la puissance des composantes du signal utile, pour par exemple limiter les effets non-linéaires affectant ces composantes lors de la transmission dans la ligne optique.

De manière avantageuse, le module de contrôle ci-avant peut être configuré en outre pour contrôler la génération des longueurs d'onde du signal optique source correspondant aux longueurs d'onde du signal optique utile en fonction d'une deuxième information relative à l'ensemble des longueurs d'onde utiles. En particulier, cette deuxième information peut comprendre une information relative à l'espacement spectral entre les longueurs d'onde utiles, à une longueur d'onde de référence et/ou à la position spectrale de chaque longueur d'onde utile. L'utilisation d'un tel type d'information facilite la génération d'un signal optique de bourrage adapté aux signaux WDM utiles employés dans le système de transmission.

Dans un mode de réalisation particulier, le module de génération du signal optique source ci-avant comprend une source optique à spectre large couplée à un filtre périodique présentant un intervalle spectral libre géré par le module de contrôle afin de contrôler l'ajustement de l'espacement spectral entre les longueurs d'onde du signal optique source. Une telle implémentation s'avère particulièrement avantageuse, en termes de flexibilité, pour obtenir un signal optique de bourrage précisément adapté au signal WDM utile employé dans le système de transmission.

Selon un autre mode de réalisation, le module de sélection en longueurs d'onde ci-avant est un commutateur sélectif en longueur d'onde comprenant des atténuateurs commandés par le module de contrôle pour éteindre les longueurs d'onde du signal optique source ne correspondant pas à une longueur d'onde utile non-allumée. L'utilisation d'une telle implémentation est particulièrement avantageuse, en termes de flexibilité et de possibilités d'ajustement dynamique, au regard de la fonction de sélection des longueurs d'onde de bourrage à injecter dans le système de transmission.

Selon un mode de réalisation avantageux, le module de contrôle est configuré pour recevoir la première information et/ou la deuxième information depuis un module de contrôle des émetteurs optiques du dispositif d'émission. Cette mise en relation directe entre le dispositif de contrôle de charge et le système de transmission à charger permet d'assurer une adaptation adéquate et en quasi-temps réel du signal de bourrage à injecter.

Dans un mode de réalisation particulier, l'information indicative du non-allumage d'au moins une longueur d'onde utile comprend une liste des longueurs d'onde allumées et/ou une liste des longueurs d'onde non-allumées de la pluralité de longueurs d'onde utiles. Ce type de paramètre permet de déterminer simplement et directement les longueurs d'onde de bourrage à injecter.

Un autre objet de l'invention consiste en un système d'émission d'un signal optique à transmettre sur une ligne de transmission optique, comprenant un dispositif d'émission, apte à moduler et multiplexer une pluralité de longueurs d'onde, dites utiles, afin de fournir le signal optique à transmettre sur la ligne optique de transmission et un dispositif de contrôle de charge tel que décrit ci-avant, configuré pour injecter un signal de bourrage dans la ligne de transmission optique.

Un autre objet de l'invention consiste en un procédé de contrôle de charge d'une ligne de transmission optique, couplée à un dispositif d'émission, apte à moduler et multiplexer un ensemble de longueurs d'onde, dites utiles, afin de fournir un signal optique utile à transmettre sur la ligne de transmission optique, comprenant les étapes suivantes :
obtenir une première information indicative du non-allumage d'au moins une longueur d'onde parmi l'ensemble de longueurs d'onde utiles ;
sélectionner, en fonction de la première information, au moins une longueur d'onde d'un signal de bourrage au sein d'au moins un signal optique source comprenant une pluralité de longueurs d'onde correspondant à la pluralité de longueurs d'onde utiles ;
générer un signal de bourrage composé de ladite au moins une longueur d'onde sélectionnée ; et
injecter le signal de bourrage dans la ligne de transmission optique.

Selon un mode de réalisation avantageux, ce procédé comprend en outre les étapes consistant à obtenir une deuxième information relative à l'ensemble des longueurs d'onde utiles et générer le signal optique source en fonction de ladite deuxième information.

Dans un mode de réalisation particulier, la première information comprend une liste des longueurs d'onde utiles non-allumées ou une liste des longueurs d'onde utiles allumées, éventuellement accompagnée par une information sur la puissance respective des longueurs d'onde allumées éventuellement, et la deuxième information comprend une information relative à l'espacement spectral (Δλ_{U}) entre les longueurs d'onde utiles, à une longueur d'onde de référence et/ou à la position spectrale de chaque longueur d'onde utile.

Selon un mode de réalisation particulier, l'obtention de la première information et/ou de la deuxième information comprend la réception de ladite première information et/ou deuxième information émise par un module de contrôle des émetteurs optique du dispositif d'émission.

D'autres caractéristiques et avantages de l'invention apparaîtront à la lecture dans la description détaillée ci-après de modes de réalisation particuliers, donnés à titre d'exemples non limitatifs, et des figures annexées dans lesquelles :
- la figure 1 représente schématiquement un système de transmission optique dans lequel est utilisé un dispositif de contrôle de charge selon un mode de réalisation de l'invention ; et
- la figure 2 illustre les étapes d'un procédé de contrôle de charge d'une ligne de transmission optique selon un mode de réalisation de l'invention.

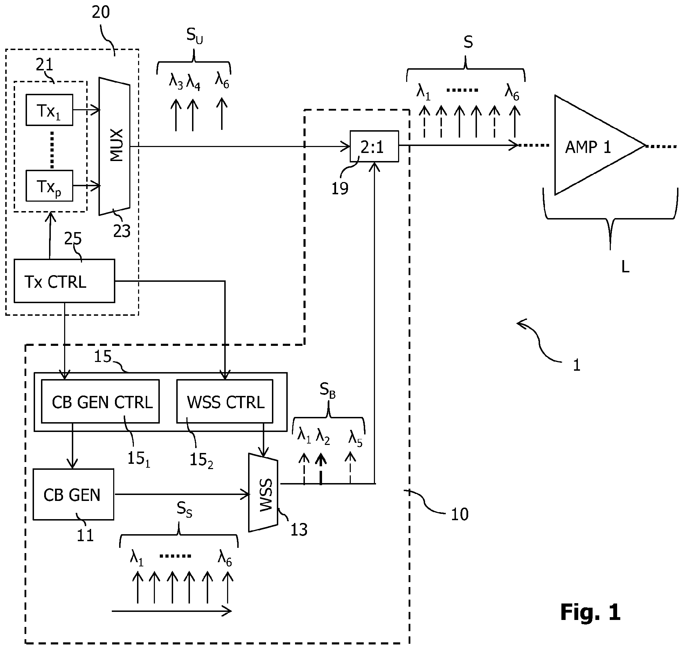

On se réfère tout d'abord à la **figure 1** sur laquelle est illustré un système de transmission optique dans lequel est utilisé un dispositif de contrôle de charge selon un mode de réalisation de l'invention.

Sur cette figure 1 est ainsi représenté un système 1 de transmission optique de type WDM, comprenant d'une part un dispositif 20 d'émission d'un signal optique, dit signal optique utile Su, lequel peut être composé d'une pluralité p de longueurs d'onde λ_{U,i}, dites longueurs d'onde utiles car pouvant être modulées par des données à transmettre, selon différents formats de modulation. Ce module 20 peut ainsi comprendre, à titre d'exemple d'implémentation, p émetteurs optiques 21, capable chacun de moduler une longueur d'onde utile λ_{U,i} distincte avec des données à transmettre, ces émetteurs pouvant être implémentés sous la forme de diodes lasers directement modulées par ces données ou de lasers combinés à des modulateurs externes modulés par ces données. Les signaux optiques en sortie de ces p émetteurs optiques 21 sont alors combinés par un module 23 de multiplexage optique (par exemple de type AWG) afin de fournir le signal optique S_{U} à transmettre sur la ligne optique L du système de transmission, laquelle se présente typiquement sous la forme de fibres optiques mono ou bidirectionnelles combinées à des amplificateurs optiques, un seul amplificateur « AMP 1 » étant ici illustré. Les longueurs d'onde utiles λ_{U,i} sont typiquement espacées spectralement de manière régulière, selon un espacement spectral Δλ_{U} habituellement défini par une grille normalisée.

Ce dispositif 20 peut comprendre également un module 25 de contrôle des émetteurs optiques 21, configuré pour obtenir un certain nombre d'informations sur ces émetteurs optiques 21, telles que des informations quant à l'allumage ou l'extinction (i.e. le non-allumage) de chacun de ces émetteurs optiques, la puissance d'émission (lorsqu'allumé) et/ou la longueur d'onde λ_{U,i} de chacun de ces émetteurs optiques, l'espacement spectral Δλ_{U} entre les longueurs d'onde λ_{U,i}, etc.

Ces informations peuvent être obtenues au moyen d'un analyseur de spectre optique (OSA) mis sur dérivation du système 1 (au travers de l'insertion d'un coupleur optique, par exemple de type 10/90) mesurant ces paramètres et communiquant le résultat de ces mesures au module 25.

Ces informations peuvent aussi être obtenues en interrogeant un dispositif de gestion du système de transmission 1 (e.g. le module 25 transmettant une requête à ce dispositif de gestion afin que ce dernier lui retourne ces informations), lequel collecte toutes les informations sur les longueurs d'onde en service, ce qui permet à ce dispositif de gestion ou au module 25 de déduire le nombre de canaux WDM à pleine charge, le nombre de canaux WDM allumés, la longueur d'onde des canaux WDM, l'espacement entre les canaux WDM allumés, la puissance des canaux WDM allumés, entre autres. Ce module 25 de contrôle peut également être configuré pour commander à ces émetteurs optiques d'émettre ou non, ou d'ajuster leur puissance optique.

Le système 1 comprend également un dispositif 10 de charge conforme à un mode de réalisation de la présente invention.

Ce dispositif 10 comprend, d'une part, des moyens de génération d'un signal optique, dit signal optique de bourrage S_{B}, lequel est composé d'une ou plusieurs longueurs d'onde (dites de bourrage), non-modulées par des données, ce signal S_{B} étant destiné à être injecté dans la ligne optique de transmission L. On entend ainsi par « signal optique de bourrage » un signal optique qui n'est pas utilisé pour transporter de l'information ou des données utile, contrairement au signal Su, mais seulement pour charger optiquement la ligne L.

Pour obtenir ce signal S_{B}, ces moyens de génération sont notamment configurés pour générer un premier signal optique, appelé signal optique source Ss, lequel comprend au moins des longueurs d'onde correspondant à toutes les longueurs d'ondes utiles λ_{U,i} pouvant être émises par le dispositif 10. Dans un cas de figure, ce signal optique source Sₛ peut être uniquement composé de l'ensemble des longueurs d'onde utiles λ_{U,i} pouvant être émises par un dispositif 20 particulier auquel le dispositif 10 est à associer. Dans un autre cas de figure, il peut être composé par un ensemble plus important de longueurs d'onde, au sein desquelles on peut retrouver les longueurs d'onde utiles pouvant être émises par différents types de dispositifs d'émission.

Les moyens de génération s'adaptent ainsi spécifiquement au dispositif d'émission 10 en entrée de ligne L, en générant un signal optique source S_{S} incluant les longueurs d'onde utiles spécifiquement utilisées par ce dispositif 10, à partir du lequel ces moyens de génération vont pouvoir obtenir le signal de bourrage S_{B}. Pour ce faire, une fois ce signal optique source S_{S} généré, ces moyens de génération sont également configurés pour sélectionner la ou les longueurs d'onde de bourrage parmi les longueurs d'onde du signal optique source Ss, afin de former ce signal S_{B}.

Dans un mode de réalisation particulier, les moyens de génération peuvent comprendre deux modules distincts 11 et 13 associés ensemble :
- D'une part, au moins un module 11 de génération du signal optique source Ss ;
- D'autre part, un module 13 de sélection en longueurs d'onde, configuré pour recevoir ce signal optique source S_{S} et pour sélectionner, sur commande du module de contrôle 15, la ou les longueurs d'onde de bourrage parmi les longueurs d'onde du signal optique source Ss, afin de composer le signal S_{B}.

Le module 11 peut être désigné par le terme de « comb generator » en ce sens qu'il génère un « peigne » de longueurs d'onde avec un nombre de « dents » (i.e. les longueurs d'onde non-modulées) et un espacement régulier entre « dents » déterminés. A titre d'exemple, le nombre de longueurs d'onde d'un tel peigne peut être de 80, avec un espacement entre longueurs d'onde de l'ordre de 50 GHz.

Un tel module 11 peut être réalisé comme décrit dans l'article « 1-THz bandwidth optical comb generation using Mach-Zehnder modulator-based flat comb generator with optical feedback loop » (I. Morohashi et al., OFC/NFOEC 2011, paper JThA29), sous la forme d'un modulateur Mach-Zehnder (MZM) attaqué avec un signal RF sinusoïdal à une fréquence égale à l'espacement entre les longueurs d'onde, le signal de sortie de ce modulateur MZM étant alors circulé dans une boucle optique afin de le réinjecter dans l'entrée du modulateur MZM. Du fait de cette recirculation, à chaque passage dans le modulateur MZM, le nombre de longueurs d'onde ainsi généré augmente, ce qui est toutefois limité par la présence d'un filtre optique passe-bande disposé au sein de la boucle optique, un amplificateur optique étant en outre ajouté dans la boucle optique pour compenser les pertes du dispositif, la bande passante d'un tel « comb generator » ne pouvant excéder celle de cet amplificateur optique.

Alternativement, ce module 11 peut être réalisé sous la forme d'un modulateur de phase, tel que celui décrit dans l'article « 50-GHz optical frequency comb generation based on an optoelectronic resonnator » (X. Xie et al., International Frequency Control Symposium 2014) ou en utilisant l'exacerbation du mélange à quatre ondes (FWM) dans des fibres optiques à faible dispersion chromatique comme décrit dans l'article « Frequency comb generation by four-wave mixing : the role of fiber dispersion » (G.A. Seffler et al., CLEO 1998, paper CFA8).

Ce module 11 peut aussi être réalisé en couplant une source optique à spectre large couplée à un filtre périodique présentant un certain intervalle spectral libre, lequel peut être géré par le module de contrôle 15 afin de contrôler l'ajustement de l'espacement spectral entre les longueurs d'onde du signal optique source, typiquement au moyen de messages d'instructions transmis du module 15 au filtre périodique afin de contrôler cet intervalle spectral libre pour qu'il coïncide avec l'espacement spectral entre longueurs d'onde utile λ_{U,i}.

Sur la figure 1, un seul module 11 est représenté, fournissant un signal Ss composé de longueurs d'onde espacées par un unique espacement spectral. Cependant, afin de pouvoir répondre à la problématique de grilles flexibles dans les systèmes de transmission WDM et au mélange au sein d'un même système WDM de grilles d'espacements variables, il est possible d'utiliser plusieurs module 11, fournissant chacun un signal optique source avec un espacement spectral distinct (par exemple deux modules fournissant des signaux d'espacement 50 GHz et 37,5 GHz).

Quant au module 13 de sélection en longueurs d'onde, il peut notamment être implémenté sous la forme d'un commutateur sélectif en longueur d'onde (« WSS » pour « Wavelength Selective Swtich » en anglais) comprenant des atténuateurs pouvant être commandés, par un module de contrôle tel que décrit ci-après, pour éteindre les longueurs d'onde du signal optique source S_{S} ne correspondant pas à une longueur d'onde utile non-allumée. Ce module 13 reçoit soit un unique signal source S_{S} sur une de ses entrées lorsqu'il est associé à un seul module 11, soit plusieurs signaux sources Ss sur plusieurs de ses entrées (un WSS classique pouvant comporter jusqu'à une vingtaine d'entrées) lorsqu'il est associé à plusieurs modules 11 générant des signaux sources d'espacement spectral différents.

Le dispositif 10 peut comprendre en outre un coupleur 19 capable de recevoir en entrée, d'une part, le signal utile S_{U} fourni par le dispositif 20 d'émission et, d'autre part, le signal de bourrage S_{B} fourni par le module 13. Le coupleur combine optiquement ces deux signaux S_{U} et S_{B} afin de les transmettre, sous la forme d'un signal combiné S, sur la ligne optique L.

Le dispositif 10 comprend en outre un module de contrôle 15 configuré pour contrôler la sélection, par les moyens de génération du signal optique, des longueurs d'onde du signal optique de bourrage S_{B} en fonction d'une information indicative du non-allumage d'une ou plusieurs longueurs d'onde utiles λ_{U-OFF}, parmi l'ensemble des longueurs d'onde utiles λ_{U,i} du dispositif d'émission 20. Un tel module de contrôle 15 peut être implémenté sous la forme d'un processeur associé à une mémoire et une interface de communication avec les moyens de génération, afin de pouvoir leur envoyer des commandes déterminées par le processeur en fonction des informations ci-après.

Dans le mode de réalisation où les moyens de génération comportent un module 11 de génération du signal optique source S_{S} associé à un module 13 de sélection en longueurs d'onde, ce module de contrôle 15 peut comprendre deux sous-module 15₁ et 15₂ contrôlant respectivement le fonctionnement du module 11 et du module 13.

Ainsi, d'une part, un premier sous-module 15₁ peut être configuré pour contrôler le fonctionnement du module 11 afin que celui-ci puisse générer un signal source S_{S} composé d'un ensemble de longueurs d'onde incluant les longueurs d'onde utiles λ_{U,i} pouvant être émises par le dispositif 20. Le sous-module 15₁ peut en particulier obtenir une information concernant l'ensemble des longueurs d'onde utile λ_{U,i} (en particulier la liste de ces longueurs d'onde utile λ_{U,i}, leur nombre, leur positionnement spectral, ou encore l'espacement spectral Δλ_{U} entre ces longueurs d'onde utiles quand celles-ci sont régulièrement espacées information) afin de pouvoir instruire au module 13 de générer un signal S_{S} comprenant des longueurs d'onde correspondant à ces longueurs d'onde utiles λ_{U,i}. Ainsi, dans un mode de réalisation, le sous-module 15₁ peut transmettre au module 13 un message avec une instruction comprenant deux paramètres, à savoir un espacement spectral Δλ_{S} sur lequel se caler et une longueur d'onde de référence, ces paramètres étant utilisés par le module 13 pour générer le signal S_{S}.

Ce sous-module 15₁ peut ainsi notamment contrôler le module 11 afin d'ajuster l'espacement spectral Δλ_{S} entre les longueurs d'onde du signal source Ss, de sorte à ce que cet espacement soit sensiblement égal à l'espacement spectral Δλ_{U} entre les longueurs d'onde des émetteurs optiques 21. Pour cela, une information sur l'espacement spectral Δλ_{U} entre longueurs d'onde des émetteurs optiques 21 peut être obtenue par le sous-module 15₁, lequel peut alors instruire au module 11 d'augmenter ou de réduire l'espacement spectral Δλ_{S} de sorte à ce qu'il coïncide avec l'espacement spectral Δλ_{U}.

Ces informations portant sur l'ensemble des longueurs d'onde utiles λ_{U,i} peuvent notamment prendre la forme d'un paramètre identifiant une grille WDM utilisée par les longueurs d'onde émises par les émetteurs optiques 21, par exemple identifiant l'utilisation d'une grille fixe de 50 GHz (donc avec un espacement de 50 GHz entre longueurs d'onde consécutives) ou identifiant le paramètre N d'une grille flexible par pas de Nx12,5 GHz.

D'autre part, le module de contrôle 15 peut comprendre un deuxième sous-module 15₂ configuré pour contrôler la sélection, par le module 13, de la ou des longueurs d'onde à conserver, parmi les longueurs d'onde du signal Ss, pour composer le signal S_{B} à injecter dans la ligne optique L. Pour cela, une information indicative du non-allumage d'une ou plusieurs longueurs d'onde λ_{U,OFF} parmi les longueurs d'onde utiles λ_{U,i} du dispositif d'émission 20 est obtenue par le module de contrôle 15₂ afin que celui-ci puisse sélectionner les longueurs d'onde du signal Ss à conserver pour composer le signal S_{B}.

Cette information peut par exemple prendre la forme d'une liste des longueurs d'onde non-allumées λ_{U,OFF} parmi l'ensemble des longueurs d'onde utiles λ_{U,i} du dispositif d'émission 20, auquel cas le sous-module de contrôle 15₂ peut sélectionner directement les longueurs d'ondes du signal S_{S} correspondant à ces longueurs d'ondes non-allumées et instruire au module 13 de ne conserver que celles-ci. Alternativement, cette information peut prendre la forme d'une liste des longueurs d'onde allumées λ_{U,ON} parmi l'ensemble des longueurs d'onde utiles λ_{U,i} du dispositif d'émission 20, auquel cas le sous-module de contrôle 15₂ peut sélectionner toutes les longueurs d'ondes du signal S_{S} ne correspondant pas à ces longueurs d'ondes allumées et instruire au module 13 de ne conserver que celles-ci.

Avantageusement, une information relative au niveau de puissance d'émission des émetteurs des longueurs d'onde utiles allumées λ_{U,ON} peut également être obtenue par le module de contrôle 15₂, cette information permettant au module 15₂ de déterminer le niveau de puissance des longueurs d'onde composant le signal S_{B}, par exemple pour sensiblement aligner le niveau de puissance de ces longueurs d'onde composant le signal S_{B} avec le niveau de puissance d'émission des canaux utiles portés par les longueurs d'onde utiles λ_{U,i}, lorsque ce dernier est homogène pour les différentes longueurs d'onde utiles, ou encore pour compenser le fait que certains canaux utiles aient un niveau de puissance d'émission différent (par exemple inférieur) par rapport à d'autres (par exemple des canaux présentant un débit de 10 Gbit/s par rapport à des canaux présentant un débit de 100 Gbit/s) et limiter ainsi les effets non-linéaires de propagation que cela peut engendrer.

Toutes les informations ci-avant peuvent être reçus par le module de contrôle 15 en provenance du module de contrôle 25 du dispositif d'émission 20, après que ce module 25 les ait recueillies, par exemple après mesure par un analyseur de spectre optique (avantageusement effectuées en temps réel) mesurant ces paramètres au niveau du dispositif 20. Comme déjà vu, ces informations peuvent aussi être obtenues en interrogeant un dispositif de gestion du système WDM (e.g. le module 25 transmettant une requête au dispositif de gestion afin que ce dernier lui retourne ces informations), lequel collecte toutes les informations sur les longueurs d'onde en service, à partir desquelles on peut aisément déduire le nombre de canaux WDM à pleine charge, le nombre de canaux WDM allumés, la longueur d'onde de ces canaux WDM, l'espacement entre les canaux WDM allumés, la puissance des canaux WDM allumés, entre autres.

Ainsi, la figure 1 illustre un exemple non-limitatif dans lequel le dispositif d'émission 20 est provisionné initialement avec 6 émetteurs optiques 21, pour pouvoir émettre un signal WDM comprenant jusqu'à 6 longueurs d'onde utiles λ₁ à λ₆ (p=6) distinctes. Lors d'une phase préalable d'installation du dispositif 10, le sous-module 15₁ obtient l'information sur le nombre et la valeur des longueurs d'ondes utiles λ₁ à λ₆ et commande le module 11 pour que celui-ci génère, en fonctionnement, un signal source S_{S} comprenant des longueurs d'onde calées sur ces longueurs d'onde λ₁ à λ₆.

A un moment donné, par exemple lors de sa première utilisation ou bien ultérieurement, ce dispositif 20 utilise la moitié de ces longueurs d'onde provisionnées en allumant seulement les émetteurs optiques 21 utilisant les longueurs d'onde λ₃, λ₄ et λ₆ afin d'émettre un signal utile Su, les autres longueurs d'ondes λ₁, λ₂ et λ₅ étant alors éteintes à ce moment donné.

Lorsque le sous-module 15₂ reçoit cette information, il sélectionne les longueurs d'onde du signal S_{S} correspondant aux longueurs d'onde éteintes λ₁, λ₂ et λ₅ et instruit au module 13 de filtrer (i.e. éteindre) les autres longueurs d'onde du signal S_{S} pour ne garder que celles-ci : le signal S_{B} en sortie du module 13 ne comprend alors que les longueurs d'onde de bourrage λ₁, λ₂ et λ₅ (en pointillés). Ce signal S_{B} est alors injecté dans la ligne optique L, au moyen du coupleur 19 qui couple ce signal S_{B} avec le signal utile S_{U}, de sorte à obtenir un signal S composé aussi bien des longueurs d'onde utiles λ₃, λ₄ et λ₆, émises par le dispositif 20 d'émission (en traits pleins), potentiellement porteuses de données utiles, que des longueurs d'onde de bourrage λ₁, λ₂ et λ₅ générées par le dispositif 10 de contrôle de charge (en pointillés).

Cette ligne de transmission optique L reçoit ainsi une pleine charge de longueurs d'onde, et ce quelque soit le nombre de longueurs d'onde réellement en service sur la ligne. En particulier, lorsque toutes les longueurs d'onde, utiles ou de bourrage, sont émises à une même puissance d'émission, la puissance de sortie du coupleur optique 19 ne varie pas, quelque soit la charge effective en termes de longueurs d'onde en service sur la liaison optique WDM.

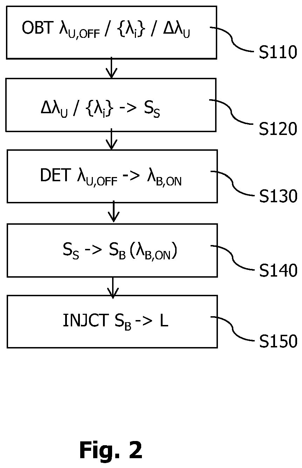

On se réfère à présent à la **figure 2** sur laquelle est illustré un procédé de contrôle de charge d'une ligne de transmission optique selon un mode de réalisation de l'invention.

Selon ce procédé, dans un premier temps, une ou plusieurs informations relatives à un dispositif d'émission 20 de signaux optique multiplexés en longueurs d'onde, couplé en entrée de la ligne optique L dont la charge optique est à gérer, sont obtenues (étape S110), typiquement par le module de contrôle 15 d'un dispositif de contrôle de charge 10 tel que décrit précédemment.

Il s'agit notamment d'une première information indicative du non-allumage d'une ou plusieurs longueurs d'onde λ_{U-OFF} parmi l'ensemble des longueurs d'onde utiles λ_{U,i} que le dispositif d'émission 20 est capable d'émettre, éventuellement sous la forme d'une liste des longueurs d'onde non-allumées par rapport à cet ensemble des longueurs d'onde utiles ou d'une liste des longueurs d'onde allumées par rapport à ce même ensemble des longueurs d'onde utiles, cette première information servant à déterminer les longueurs d'onde inutilisées pouvant servir de longueur d'onde de bourrage. Cette première information peut avantageusement être complétée par une information sur les niveaux de puissance d'émission respectifs des émetteurs optiques allumés, cette information complémentaire permettant le cas échéant de réguler le niveau de puissance des composantes du signal de bourrage S_{B} pour limiter les effets non-linéaires de propagation, comme vu précédemment.

Il peut aussi s'agir avantageusement d'une deuxième information concernant l'ensemble des longueurs d'onde utile λ_{U,i} pouvant être émises par ce dispositif d'émission, en particulier une liste de ces longueurs d'onde utile λ_{U,i}, leur nombre, leur positionnement spectral, ou encore l'espacement spectral Δλ_{U} entre ces longueurs d'onde utiles quand celles-ci sont régulièrement espacées. Ces informations peuvent notamment être obtenues (éventuellement par mesure directe par un analyseur de spectre optique et en temps réel) par un module de contrôle 25 du dispositif d'émission 20, qui se charge alors de les transmettre au module de contrôle 15 du dispositif de charge 10 selon la présente invention.

La deuxième information peut alors être utilisée pour générer (S120) un signal optique source S_{S} comprenant une pluralité de longueurs d'onde correspondant aux longueurs d'onde utiles λ_{U,i}. Ainsi, la source optique générant ce signal S_{S} peut être réglée de sorte à ce que l'espacement spectral Δλ_{S} entre les longueurs d'onde du signal S_{S} soit sensiblement égal à l'espacement spectral Δλ_{U} fourni par cette deuxième information.

La première information indicative du non-allumage d'une ou plusieurs longueurs d'onde utiles λ_{U-OFF} est, pour sa part, utilisée pour sélectionner (étape S130) une ou plusieurs longueurs d'onde λ_{B-ON} d'un signal de bourrage S_{B} à générer à partir du signal S_{S}. Une information complémentaire sur la puissance d'émission pour les longueurs d'onde utiles allumées peut alors avantageusement être utilisée ici pour fixer le niveau de puissance d'émission des longueurs d'onde λ_{B-ON} sélectionnées.

Une fois la sélection des longueurs d'onde λ_{B-ON} du signal de bourrage S_{B} effectuée, le signal de bourrage S_{B} peut être généré (étape S140), celui-ci étant uniquement composé des longueurs d'onde sélectionnées, non-modulées par des données utiles, lesquelles correspondent aux longueurs d'onde utiles éteintes du dispositif d'émission 20.

Ce signal de bourrage S_{B} peut alors être injecté (étape S150) dans la ligne de transmission optique L, qu'il peut ainsi charger optiquement en complément du signal optique utile S_{U} transmis dans cette ligne.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

Ainsi, bien qu'ait été décrit un module de contrôle 15 distinct comprenant deux sous-modules 15₁ et 15₂ contrôlant respectivement le module de génération 11 et le module de sélection 13, les fonctions de ces deux sous-modules peuvent être rassemblées au sein d'un unique module de contrôle, ou bien encore intégrées directement dans les modules de génération 11 et de sélection 13.

De plus, l'ordre des étapes du procédé illustré à la figure 2 n'est pas obligatoire et ces étapes peuvent se présenter dans un ordre différent, sous réserve que la deuxième information soit obtenue avant la génération du signal S_{S} (étape S120), que la première information soit obtenue avant la sélection des longueurs d'onde de bourrage (étape S130), et que la génération du signal S_{B} (étape S120) ait lieu avant la sélection des longueurs d'onde de bourrage (étape S130), la génération du signal S_{B} (étape S140) et l'injection du signal S_{B} (étape S150).

## Revendications

1. Dispositif de contrôle de charge (10) d'une ligne (L) de transmission optique dont l'entrée est couplée à un dispositif d'émission (20) apte à moduler avec des données et multiplexer une pluralité de longueurs d'onde, dites utiles, en un signal optique utile (Su) à transmettre sur la ligne de transmission optique, le dispositif de contrôle de charge comprenant des moyens (11,13) de génération d'un signal optique de bourrage (S_{B}), composé d'au moins une longueur d'onde de bourrage (λ_{B-ON}) non-modulée par des données, à injecter dans la ligne de transmission optique,
les moyens (11,13) de génération étant configurés pour générer au moins un signal optique source (S_{S}) composé au moins d'une pluralité de longueurs d'onde correspondant à la pluralité de longueurs d'onde du signal optique utile (S_{U}) et pour sélectionner ladite au moins une longueur d'onde (λ_{B-ON}) du signal optique de bourrage parmi les longueurs d'onde du au moins un signal optique source (S_{S}) ;
le dispositif de contrôle de charge étant **caractérisé en ce qu'**il comprend un module de contrôle (15) configuré pour contrôler la sélection, par les moyens de génération (11,13), de ladite au moins une longueur d'onde du signal optique de bourrage (S_{B}) en fonction d'une première information indicative du non-allumage d'au moins une longueur d'onde (λ_{U-OFF}) parmi la pluralité de longueurs d'onde du signal optique utile (Su).

2. Dispositif selon la revendication 1, dans lequel les moyens (11,13) de génération comprennent :
au moins un module (11) de génération d'un signal optique source (S_{S}) contrôlé par le module de contrôle (15) ; et
un module (13) de sélection en longueurs d'onde, configuré pour recevoir le signal optique source et pour sélectionner, sur commande du module de contrôle (15), ladite au moins une longueur d'onde du signal optique de bourrage (S_{B}) parmi les longueurs d'onde du au moins un signal optique source.

3. Dispositif selon la revendication 2, dans lequel le module (13) de sélection est configuré en outre pour ajuster le niveau de puissance de ladite au moins une longueur d'onde du signal optique de bourrage (S_{B}) sélectionnée en fonction d'une information relative au niveau de puissance d'émission des longueurs d'onde utiles.

4. Dispositif selon la revendication 2 ou 3, dans lequel le module de contrôle est configuré en outre pour contrôler la génération des longueurs d'onde du signal optique source (S_{S}) correspondant aux longueurs d'onde du signal optique utile (Su) en fonction d'une deuxième information relative à l'ensemble des longueurs d'onde utiles.

5. Dispositif selon la revendication 4, dans lequel la deuxième information comprend une information relative à l'espacement spectral (Δλ_{U}) entre les longueurs d'onde utiles, à une longueur d'onde de référence et/ou à la position spectrale de chaque longueur d'onde utile.

6. Dispositif selon la revendication 5, dans lequel le module (11) de génération du signal optique source comprend une source optique à spectre large couplée à un filtre périodique présentant un intervalle spectral libre géré par le module de contrôle (15) afin de contrôler l'ajustement de l'espacement spectral entre les longueurs d'onde du signal optique source.

7. Dispositif selon l'une des revendications 2 à 6, dans lequel le module (13) de sélection en longueurs d'onde est un commutateur sélectif en longueur d'onde (WSS) comprenant des atténuateurs commandés par le module de contrôle (15) pour éteindre les longueurs d'onde du signal optique source ne correspondant pas à une longueur d'onde utile non-allumée.

8. Dispositif selon l'une des revendications 1 à 7, dans lequel le module de contrôle est configuré pour recevoir la première information et/ou la deuxième information depuis un module de contrôle (25) des émetteurs optiques du dispositif d'émission (20).

9. Dispositif selon l'une des revendications 1 à 8, dans lequel la première information indicative du non-allumage d'au moins une longueur d'onde utile comprend une liste des longueurs d'onde allumées et/ou une liste des longueurs d'onde non-allumées de la pluralité de longueurs d'onde utiles.

10. Système d'émission d'un signal optique (S_{U}) à transmettre sur une ligne de transmission optique (L), comprenant un dispositif d'émission (20), apte à moduler et multiplexer une pluralité de longueurs d'onde, dites utiles, afin de fournir le signal optique (S_{U}) à transmettre sur la ligne optique de transmission et un dispositif de contrôle de charge (10) selon l'une des revendications 1 à 9, configuré pour injecter un signal de bourrage (S_{B}) dans la ligne de transmission optique.

11. Procédé de contrôle de charge d'une ligne (L) de transmission optique, couplée à un dispositif d'émission (20), apte à moduler et multiplexer un ensemble de longueurs d'onde, dites utiles, afin de fournir un signal optique utile (S_{U}) à transmettre sur la ligne de transmission optique, comprenant les étapes suivantes :
obtenir (S110) une première information indicative du non-allumage d'au moins une longueur d'onde (λ_{U-OFF}) parmi l'ensemble de longueurs d'onde utiles ;
sélectionner (S130), en fonction de la première information, au moins une longueur d'onde (λ_{B-ON}) d'un signal de bourrage (S_{B}) au sein d'au moins un signal optique source (S_{S}) comprenant une pluralité de longueurs d'onde correspondant à la pluralité de longueurs d'onde utiles ;
générer (S140) un signal de bourrage (S_{B}) composé de ladite au moins une longueur d'onde sélectionnée ; et
injecter (S150) le signal de bourrage (S_{B}) dans la ligne de transmission optique.

12. Procédé de contrôle de charge selon la revendication 11, comprenant en outre les étapes suivantes :
obtenir (S110) une deuxième information relative à l'ensemble des longueurs d'onde utiles ; et
générer (S120) le signal optique source (S_{S}) en fonction de ladite deuxième information.

13. Procédé de contrôle de charge selon la revendication 12, dans lequel la première information comprend une liste des longueurs d'onde utiles non-allumées et/ou une liste des longueurs d'onde utiles allumées et la deuxième information comprend une information relative à l'espacement spectral (Δλ_{U}) entre les longueurs d'onde utiles, à une longueur d'onde de référence et/ou à la position spectrale de chaque longueur d'onde utile.

14. Procédé de contrôle de charge selon l'une des revendications 11 à 13, dans lequel l'obtention de la première information et/ou de la deuxième information comprend la réception de ladite première information et/ou deuxième information émise par un module de contrôle (25) des émetteurs optique du dispositif d'émission (20).

## Patentansprüche

1. Vorrichtung zur Steuerung der Last (10) einer optischen Übertragungsleitung (L), deren Eingang an eine Sendevorrichtung (20) gekoppelt ist, die geeignet ist, eine Mehrzahl von Nutzwellenlängen mit Daten zu modulieren und zu einem optischen Nutzsignal (Su) zu multiplexen, das auf der optischen Übertragungsleitung zu übertragen ist, wobei die Laststeuerungsvorrichtung Mittel (11, 13) zur Erzeugung eines optischen Dummy-Signals (S_{B}) umfasst, das aus mindestens einer Dummy-Wellenlänge (λ_{B-ON}) zusammengesetzt ist, die nicht durch Daten moduliert ist, die in die optische Übertragungsleitung zu injizieren ist,
wobei die Erzeugungsmittel (11, 13) dazu ausgebildet sind, mindestens ein optisches Quellsignal (S_{S}) zu erzeugen, das wenigstens aus einer Mehrzahl von Wellenlängen zusammengesetzt ist, die der Mehrzahl von Wellenlängen des optischen Nutzsignals (S_{U}) entsprechen, und die mindestens eine Wellenlänge (λ_{B-ON}) des optischen Dummy-Signals aus den Wellenlängen des mindestens einen optischen Quellsignals (S_{S}) auszuwählen;
wobei die Laststeuerungsvorrichtung **dadurch gekennzeichnet ist, dass** sie ein Steuerungsmodul (15) umfasst, das dazu ausgebildet ist, das Auswählen, durch die Erzeugungsmittel (11, 13), der mindestens einen Wellenlänge des optischen Dummy-Signals (S_{B}) in Abhängigkeit von einer ersten Information zu steuern, die die Nichteinschaltung mindestens einer Wellenlänge (λ_{U-OFF}) aus der Mehrzahl von Wellenlängen des optischen Nutzsignals (Su) angibt.

2. Vorrichtung nach Anspruch 1, wobei die Erzeugungsmittel (11, 13) Folgendes umfassen:
mindestens ein Modul (11) zur Erzeugung eines optischen Quellsignals (S_{S}), das vom Steuerungsmodul (15) gesteuert wird; und
ein Wellenlängen-Auswahlmodul (13), das dazu ausgebildet ist, das optische Quellsignal zu empfangen und auf Befehl des Steuerungsmoduls (15) die mindestens eine Wellenlänge des optischen Dummy-Signals (S_{B}) aus den Wellenlängen des mindestens einen optischen Quellsignals auszuwählen.

3. Vorrichtung nach Anspruch 2, wobei das Auswahlmodul (13) ferner dazu ausgebildet ist, den Leistungspegel der mindestens einen Wellenlänge des optischen Dummy-Signals (S_{B}) einzustellen, die in Abhängigkeit von einer Information in Bezug auf den Sendeleistungspegel der Nutzwellenlängen ausgewählt wird.

4. Vorrichtung nach Anspruch 2 oder 3, wobei das Steuerungsmodul ferner dazu ausgebildet ist, das Erzeugen der Wellenlängen des optischen Quellsignals (S_{S}), die den Wellenlängen des optischen Nutzsignals (Su) entsprechen, in Abhängigkeit von einer zweiten Information in Bezug auf die Menge der Nutzwellenlängen zu steuern.

5. Vorrichtung nach Anspruch 4, wobei die zweite Information eine Information in Bezug auf den Spektralabstand (Δλ_{U}) zwischen den Nutzwellenlängen, zu einer Referenzwellenlänge und/oder zur Spektralposition jeder Nutzwellenlänge umfasst.

6. Vorrichtung nach Anspruch 5, wobei das Modul (11) zur Erzeugung des optischen Quellsignals eine optische Quelle mit großem Spektrum umfasst, die an einen periodischen Filter gekoppelt ist, der einen freien Spektralbereich aufweist, der vom Steuerungsmodul (15) verwaltet wird, um die Einstellung des Spektralabstands zwischen den Wellenlängen des optischen Quellsignals zu steuern.

7. Vorrichtung nach einem der Ansprüche 2 bis 6, wobei das Wellenlängen-Auswahlmodul (13) ein wellenlängenselektiver Schalter (WSS) ist, der Dämpfer umfasst, die vom Steuerungsmodul (15) gesteuert werden, um die Wellenlängen des optischen Quellsignals auszuschalten, die nicht einer nicht eingeschalteten Nutzwellenlänge entsprechen.

8. Vorrichtung nach einem der Ansprüche 1 bis 7, wobei das Steuerungsmodul dazu ausgebildet ist, die erste Information und/oder die zweite Information von einem Steuerungsmodul (25) der optischen Sender der Sendevorrichtung (20) zu empfangen.

9. Vorrichtung nach einem der Ansprüche 1 bis 8, wobei die erste Information, die die Nichteinschaltung mindestens einer Nutzwellenlänge angibt, eine Liste der eingeschalteten Wellenlängen und/oder eine Liste der nicht eingeschalteten Wellenlängen der Mehrzahl von Nutzwellenlängen umfasst.

10. System zur Sendung eines optischen Signals (Su), das auf einer optischen Übertragungsleitung (L) zu übertragen ist, umfassend eine Sendevorrichtung (20), die geeignet ist, eine Mehrzahl von Nutzwellenlängen zu modulieren und zu multiplexen, um das optische Signal (Su) bereitzustellen, das auf der optischen Übertragungsleitung zu übertragen ist, und eine Laststeuerungsvorrichtung (10) nach einem der Ansprüche 1 bis 9, die dazu ausgebildet ist, ein Dummy-Signal (S_{B}) in die optische Übertragungsleitung zu injizieren.

11. Verfahren zur Steuerung der Last einer optischen Übertragungsleitung (L), die an eine Sendevorrichtung (20) gekoppelt ist, die geeignet ist, eine Menge von Nutzwellenlängen zu modulieren und zu multiplexen, um ein optisches Nutzsignal (Su) bereitzustellen, das auf der optischen Übertragungsleitung zu übertragen ist, umfassend die folgenden Schritte:
Beziehen (S110) einer ersten Information, die die Nichteinschaltung mindestens einer Wellenlänge (λ_{U-OFF}) aus der Menge von Nutzwellenlängen angibt;
Auswählen (S130), in Abhängigkeit von der ersten Information, mindestens einer Wellenlänge (λ_{B-ON}) eines Dummy-Signals (S_{B}) innerhalb mindestens eines optischen Quellsignals (S_{S}), das eine Mehrzahl von Wellenlängen umfasst, die der Mehrzahl von Nutzwellenlängen entsprechen;
Erzeugen (S140) eines Dummy-Signals (S_{B}), das aus der mindestens einen ausgewählten Wellenlänge zusammengesetzt ist; und
Injizieren (S150) des Dummy-Signals (S_{B}) in die optische Übertragungsleitung.

12. Laststeuerungsverfahren nach Anspruch 11, ferner umfassend die folgenden Schritte:
Beziehen (S110) einer zweiten Information in Bezug auf die Menge der Nutzwellenlängen; und
Erzeugen (S120) des optischen Quellsignals (S_{S}) in Abhängigkeit von der zweiten Information.

13. Laststeuerungsverfahren nach Anspruch 12, wobei die erste Information eine Liste der nicht eingeschalteten Nutzwellenlängen und/oder eine Liste der eingeschalteten Nutzwellenlängen umfasst und die zweite Information eine Information in Bezug auf den Spektralabstand (Δλ_{U}) zwischen den Nutzwellenlängen, zu einer Referenzwellenlänge und/oder zur Spektralposition jeder Nutzwellenlänge umfasst.

14. Laststeuerungsverfahren nach einem der Ansprüche 11 bis 13, wobei das Beziehen der ersten Information und/oder der zweiten Information das Empfangen der ersten Information und/oder der zweiten Information umfasst, die von einem Steuerungsmodul (25) der optischen Sender der Sendevorrichtung (20) gesendet wird.

## Claims

1. Load-controlling device (10) for controlling the load on an optical transmission line (L) the input of which is coupled to an emitting device (20) suitable for modulating with data and multiplexing a plurality of what are called useful wavelengths into a useful optical signal (S_{U}) to be transmitted over the optical transmission line, the load-controlling device comprising means (11, 13) for generating a filler optical signal (S_{B}), which is composed of at least one filler wavelength (λ_{B-ON}) that is not modulated by data, to be injected into the optical transmission line,
the generating means (11, 13) being configured to generate at least one source optical signal (S_{S}) composed of at least a plurality of wavelengths corresponding to the plurality of wavelengths of the useful optical signal (Su) and to select said at least one wavelength (λ_{B-ON}) of the filler optical signal among the wavelengths of the at least one source optical signal (Ss);
the load-controlling device being **characterized in that** it comprises a control module (15) configured to control the selection, by the generating means (11, 13), of said at least one wavelength of the filler optical signal (S_{B}) depending on first information that is indicative of the non-turn-on of at least one wavelength (λ_{U-OFF}) among the plurality of wavelengths of the useful optical signal (S_{U}).

2. Device according to Claim 1, wherein the generating means (11, 13) comprise:
at least one module (11) for generating a source optical signal (S_{S}) controlled by the control module (15); and
one wavelength-selecting module (13) configured to receive the source optical signal and to select, on command from the control module (15), said at least one wavelength of the filler optical signal (S_{B}) among the wavelengths of the at least one source optical signal.

3. Device according to Claim 2, wherein the selecting module (13) is furthermore configured to adjust the power level of said at least one wavelength of the selected filler optical signal (S_{B}) depending on information relating to the emission power level of the useful wavelengths.

4. Device according to Claim 2 or 3, wherein the control module is furthermore configured to control the generation of the wavelengths of the source optical signal (S_{S}) corresponding to the wavelengths of the useful optical signal (S_{U}) depending on second information relating to all of the useful wavelengths.

5. Device according to Claim 4, wherein the second information comprises information relating to the spectral spacing (Δλ_{U}) between the useful wavelengths, to a reference wavelength and/or to the spectral position of each useful wavelength.

6. Device according to Claim 5, wherein the module (11) for generating the source optical signal comprises a broad spectrum optical source coupled to a periodic filter having a free spectral range managed by the control module (15) in order to control the adjustment of the spectral spacing between the wavelengths of the source optical signal.

7. Device according to one of Claims 2 to 6, wherein the wavelength-selecting module (13) is a wavelength selective switch (WSS) comprising attenuators commanded by the control module (15) in order to turn off the wavelengths of the source optical signal that do not correspond to a non-turned-on useful wavelength.

8. Device according to one of Claims 1 to 7, wherein the control module is configured to receive the first information and/or the second information from a control module (25) for controlling the optical emitters of the emitting device (20).

9. Device according to one of Claims 1 to 8, wherein the first information indicative of the non-turn-on of at least one useful wavelength comprises a list of turned-on wavelengths and/or a list of the non-turned-on wavelengths of the plurality of useful wavelengths.

10. System for emitting an optical signal (Su) to be transmitted over an optical transmission line (L), comprising an emitting device (20), suitable for modulating and multiplexing a plurality of what are called useful wavelengths in order to deliver the optical signal (S_{U}) to be transmitted over the optical transmission line and a load-controlling device (10) according to one of Claims 1 to 9, configured to inject a filler signal (S_{B}) into the optical transmission line.

11. Load-controlling method for controlling the load on an optical transmission line (L) that is coupled to an emitting device (20) that is suitable for modulating and multiplexing a set of what are called useful wavelengths in order to deliver a useful optical signal (Su) to be transmitted over the optical transmission line, comprising the following steps:
obtaining (S110) first information indicative of the non-turn-on of at least one wavelength (λ_{U-OFF}) among the set of useful wavelengths;
selecting (S130), depending on the first information, at least one wavelength (λ_{B-ON}) of a filler signal (S_{B}) within at least one source optical signal (S_{S}) comprising a plurality of wavelengths corresponding to the plurality of useful wavelengths;
generating (S140) a filler signal (S_{B}) composed of said at least one selected wavelength; and
injecting (S150) the filler signal (S_{B}) into the optical transmission line.

12. Load-controlling method according to Claim 11, furthermore comprising the following steps:
obtaining (S110) second information relating to all of the useful wavelengths; and
generating (S120) the source optical signal (S_{S}) depending on said second information.

13. Load-controlling method according to Claim 12, wherein the first information comprises a list of non-turned-on useful wavelengths and/or a list of turned-on useful wavelengths and the second information comprises information relating to the spectral spacing (Δλ_{U}) between the useful wavelengths, to the reference wavelength and/or to the spectral position of each useful wavelength.

14. Load-controlling method according to one of Claims 11 to 13, wherein the obtainment of the first information and/or the second information comprises receiving said first information and/or second information from a control module (25) for controlling the optical emitters of the emitting device (20).
